# EUROPEAN PATENT SPECIFICATION

(11) **EP 1 630 541 B1**
(45) Date of publication and mention of the grant of the patent: **07.01.2009**
(21) Application number: 04256382.5
(22) Date of filing: 15.10.2004
(51) Int. Cl.: G01N 21/03

(54) **Sample tab**
Probenhalter
Porte-Echantillon

(30) Priority: 31.08.2004 US 929887
(43) Date of publication of application: 01.03.2006
(73) Proprietor: Spectromedical Inc., Cambridge, Ontario N1T 1M7 (CA)
(72) Inventor: Samsoondar, James, Cambridge, Ontario N1T 1M7 (CA)
(74) Representative: Main, Malcolm Charles

(56) References cited:
- EP-A- 1 102 057
- DE-A1- 4 021 855
- FR-A- 2 714 183
- US-A- 5 863 791

## Description

### FIELD OF THE INVENTION

The invention relates to a tab for retaining a sample for analysis. More particularly, the present invention provides an apparatus and method for sample analysis using a variety of instruments including spectroscopic or microscopic analysis.

### BACKGROUND OF THE INVENTION

Rapid methods for analysis of a compound or a substance of interest within a biological or non-biological sample are desired within the art.

For example, U.S. Pat. Nos. 4,575,240, 4,134,678 and 4,734,260 disclose sample chambers for fluid analysis within automated analysers. In U.S. Pat. No. 4,575,240, the sample chamber is complex comprising input and output ports for adding a fluid sample into a reservoir formed within a prism that is sealed against a window through which light passes through. A spring attached to a door of the chamber is provided so that when the door is closed, the spring urges the prism against a sealing member. U.S. Pat. No. 4,134,678 discloses an, on-line cuvette that can be use within an automated analyser comprising sample input and output ports.

U.S. Pat. No. 4,734,260 discloses a cuvette for liquid sample analysis comprising a thin sample chamber delimited by radiation transmitting members. The chamber is made from a plurality of component parts that when assembled form the cuvette. Ports extend into, and out of, the sample chamber for sample injection and withdrawal. The ports pass through a housing and one of the radiation transmitting members. Plugs are provided to seal the ports after a sample has been introduced into the cuvette.

U.S. Pat. No. 5,430,542 discloses a simplified disposable cuvette made of two transparent plastic cover sheets that are adhesively attached to a third thicker plastic sheet comprising a sample cavity. The disposable cuvette comprises input and output ports, with the input port adapted to be attached to a syringe for sample introduction. Again, only fluid samples may be analysed using this disposable cuvette.

EP1102057 A1 discloses a sample holder with two transparent interchangeable housing parts connected by an integral hinge. DE 4021855 describes a cuvette for use in spectroscopic analysis with an adjustable well height. FR2714183 A1 describes the insertion of sleeves with various wall thickness into the containers of a multititer plate to cause the liquid in the containers to rise.

There is a need for a sample chamber that is easy to use and adaptable for a range of applications, including the analysis of semi-solid and fluid samples. It is an object of the present invention to overcome disadvantages of the prior art.

The above object is met by a combination of the features of the main claims.

The sub claims disclose further advantageous embodiments of the invention.

### SUMMARY OF THE INVENTION

The present invention relates to a sample tab for retaining a sample for analysis.

In the first aspect there is provided a sample tab (5) comprising:
a base plate (45) having a top surface (48) and a bottom surface, the top surface (48) of the base plate (45) defining a first plane (70);
a well (10) disposed on a section of the base plate (45), the well (10) having a side wall (15) and a bottom wall (13), the side wall (15) comprising one, or more than one overflow opening (20) and being surrounded by a containment wall (37), wherein the containment wall (37) and the side wall (15) define an overflow channel (30) therebetween, and wherein a top surface (12) of the bottom wall (13) defines a second plane (75), the second plane (75) disposed above or below the first plane (70); and
a cover plate (40) hingedly connected to the base plate (45), the cover plate (40) having an open position allowing a sample to be introduced into the well (10) and a closed position in which a bottom surface of a section of the cover plate (40) covers the well (10);
wherein
(a) at least a portion of the bottom wall (13) of the well (10) is transparent or translucent, and wherein at least a portion of one of (i) the section of the cover plate (40) and (ii) the section of the base plate (45) is transparent or translucent, and at least a portion of the other of (i) the section of the cover plate (40) and (ii) the section of the base plate (45) is transparent, translucent or reflective; or
(b) the bottom wall (13) of the well (10) is formed by the section of the base plate, and wherein at least a portion of one of (i) the section of the cover plate (40) and (ii) the section of the base plate (45) is transparent or translucent, and at least a portion of the other of (i) the section of the cover plate (40) and (ii) the section of the base plate (45) is transparent, translucent, or reflective.

In one embodiment of the sample tab of the invention, the second plane (75) is below the first plane (70).

In one embodiment of the sample tab of the invention, the second plane (75) is above the first plane (70).

In one embodiment the sample tab of the invention, the side wall (15) and the bottom wall (13) of the well are formed by the base plate (45).

The present invention also provides a set of two, or more than two sample tabs, wherein each of the two, or more than two sample tabs is defined according to the sample tab of the first aspect of the invention, wherein:
a) the side wall (15) of the well (10) of one of the two; or more than two sample tabs has, on its inner surface, a height (h) of a first value, and the side wall (15) of the well (10) of each of the other one, or more than one of the two, or more than two sample tabs has, on its inner surface, a height (h) substantially equal to the first value, and
   the bottom wall (13) of the well (10) of one of the two; or more than two sample tabs has, on its upper surface, a length of a second value, and the bottom wall (13) of the well (10) of each of the other one, or more than one of the two, or more than two sample tabs has, on its upper surface, a length less than or greater than the second value, or
b) the side wall (15) of the well (10) of one of the two, or more than two sample tabs has, on its inner surface, a height (h) of a first value, and the side wall (15) of the well (10) of each of the other one, or more than one of the two, or more than two sample tabs has, on its inner surface, a height (h) less than or greater than the first value, and
   the bottom wall (13) of the well (10) of one of the two, or more than two sample tabs has, on its upper surface, a length of a second value, and the bottom wall (13) of the well (10) of each of the other one, or more than one of the two, or more than two sample tabs has, on its upper surface, a length substantially equal to the second value.

In the sample tab of the invention, the side wall comprises one, or more than one overflow opening, and the side wall is surrounded by a containment wall, wherein the side wall and the containment wall define an overflow channel therebetween, for collecting excess sample as it is squeezed out by the closing cover plate.

The containment wall may comprise a sealing member on its upper surface. The sealing member may be an O ring, or a pliable material integral with the containment wall. In another example, the cover plate is attached to the tab so that the sample proximate the portion of the cover plate connected to the base plate makes contact with the cover plate first, and as the cover plate closes, excess sample is squeezed out through the one, or more than one overflow opening and into the overflow ring.

The cover plate may be connected to the base plate or may be separate. Further, the sample tab may comprise a locking member that associates with a corresponding mating member, thereby permitting the cover plate to be connected to the base plate. The locking member may comprise, but is not limited to, an element capable of frictionally engaging an outer portion of a containment wall, such as a circular ring or one, or more than one clip capable of frictionally engaging and attaching the cover plate to the base plate. The locking members may be located on the base plate, cover plate or both the base plate, and the cover plate. Similarly, the associated mating member that receives the looking member may be located on the base plate, cover plate or both the base plate, and the cover plate.

In other examples of the above-defined sample tab, the side wall of the well is circular. In further examples, the containment wall is circular.

The present invention also provides a method for analyzing a sample, composing:
i) adding a sample into the well of the sample tab of the invention;
ii) closing the cover plate of the sample tab;
iii) inserting the sample tab into an instrument for analyzing the sample, and
iv) analyzing the sample.

In one embodiment, the present invention provides a method for analyzing a set of two, or more than two samples, comprising:
i) adding one of the two, or more than two samples into the well of one of the two, or more than two sample tabs of the set described above;
ii) closing the cover plate of the sample tab from step i);
iii) inserting the sample tab from step ii) into an instrument for analyzing the sample added in step i);
iv) analyzing the sample, and
v) repeating steps i)-iv) for each of the other one, or more than one sample tab of the two, or more than two sample tabs.

In an example of the above methods, in the step of inserting (step iii)), the sample tab is placed in a horizontal position within a sample holder of the instrument, and wherein the sample is analyzed by projecting electromagnetic radiation through the well in a direction substantially perpendicular to the position of the sample tab.

Other features and advantages of the present invention will become apparent from the following detailed description. It should be understood, however, that the detailed description and the specific examples while indicating preferred embodiments of the invention are given by way of illustration only, since various changes and modifications will become apparent to those skilled in the art from this detailed description.

This summary does not necessarily describe all necessary features of the invention but that the invention may also reside in a sub-combination of the described features.

### BRIEF DESCRIPTION OF THE DRAWINGS

These and other features of the invention will become more apparent from the following description in which reference is made to the appended drawings wherein:
Figure 1 is a perspective view of a system incorporating an apparatus of the present invention for measuring Hemoglobin A_{1c}.
Figure 2 is a perspective view illustrating the sample tab of the apparatus of Figure 1.
Figure 3 depicts various aspects of an example of a sample tab of the present invention. Figure 3A illustrates an oblique view of the sample tab. Figure 3B exhibits a side view of the sample tab.
Figure 4 depicts various aspects of an alternate example of a sample tab of the present invention. Figure 4A illustrates an oblique view of the sample tab. Figure 4B exhibits a side view of the sample tab.
Figure 5 depicts various aspects of an alternate example of a sample tab of the present invention. Figure 5A illustrates an oblique view of the sample tab. Figure 5B exhibits a side view of the sample tab.
Figure 6 is a perspective view of another example of a sample tab according to the present invention.
Figure 7 shows cross sectional views of additional examples according to the present invention. Figure 7A is a cross-sectional view in the direction of the arrows 7A-7A in Figure 2. The cover plate connected to the base plate of the illustrated sample tab has been removed for the sake of clarity. Figure 7B is a transverse cross-sectional view of an alternate example of the sample tab of the present invention. The cover plate connected to the base plate of the illustrated sample tab has been removed for the sake of clarity.
Figure 8 shows transverse cross-sectional views through the sample well of further examples of sample tabs. In Figures 8A-D, the cover plates connected to the base plate of the illustrated sample tabs have been removed for the sake of clarity. The side wells of the sample tabs of Figure 8B and 8D according to the invention include one, or more than one opening leading to the containment channel, which are not shown in these Figures.
Figure 9 shows transverse cross-sectional views through the sample well of further examples of sample tabs . In Figures 9A-D, the cover plates connected to the base plate of the illustrated sample tabs have been removed for the sake of clarity. The side wells of the sample tabs of Figure 9B and 9D according to the invention include one, or more than one opening leading to the containment channel, which are not shown in these Figures.
Figure 10 shows transverse cross-sectional views through the sample well of further examples of sample tabs. In Figures 10A-D, the cover plates connected to the base plate of the illustrated sample tabs have been removed for the sake of clarity. The side wells of the sample tabs of Figure 10B and 10D according to the invention include one, or more than one opening leading to the containment channel, which are not shown in these Figures.
Figure 11 shows a transverse cross-sectional view through an additional example of a sample tab according to the present invention. The cover plate connected to the base plate of the illustrated sample tab has been removed for clarity.
Figure 12 shows transverse cross-sectional views through the sample well of examples of sample tabs according to the present invention. Figures 12A-C show different volumes of the sample well obtained by varying the diameter of a bottom wall that is coplanar with the top surface of the base plate. The cover plates connected to the base plate of the illustrated sample tabs have been removed for the sake of clarity.
Figure 13 shows transverse cross-sectional views through the sample well of examples of sample tabs according to the present invention. Figure 13A-C show different volumes of the sample well obtained by varying the diameter of a bottom wall that lies below the plane of the top surface of the base plate. The cover plates connected to the base plate of the illustrated sample tabs have been removed for the sake of clarity.
Figure 14 shows transverse cross-sectional views through the sample well of examples of sample tabs according to the present invention. Figure 14A-C show different volumes of the sample well obtained by varying the diameter of the bottom wall that lies above the plane of the top surface of the base plate. The cover plates connected to the base plate of the illustrated sample tabs have been removed for the sake of clarity.
Figure 15 shows a transverse cross-sectional view through examples of the disposable sample well according to the present invention. Figures 15A-C show different volumes of the sample well obtained by varying the diameter of a bottom wall of an insert that may be fitted within a base plate.
Figure 16 shows a transverse cross-sectional view through examples of the disposable sample well according to the present invention. Figures 16A-C show different volumes of the sample well obtained by varying the diameter of a bottom wall of an insert that may be fitted within a base plate.
Figure 17 shows examples of transverse cross-sectional views of the disposable sample well according to the present invention. Figure 17A-C show different volumes of the sample well obtained by varying the diameter of a bottom wall of an insert that may be fitted within a base plate.
Figure 18 shows a transverse cross-sectional view of another example of a disposable well or insert according to the present invention, which contains an overflow channel.
Figure 19 shows a transverse cross-sectional view of an additional example of an insert fitted within a sample tab according to the present invention.
Figure 20 shows a transverse cross-sectional view of an additional example of an insert fitted within a sample tab according to the present invention.

### DESCRIPTION OF PREFERRED EMBODIMENT

The invention relates to a tab for retaining a sample for analysis. More particularly, the present invention provides a sample tab and a method for sample analysis using a variety of instruments including a spectrophotometer or a microscope.

The following description is of a preferred embodiment by way of example only and without limitation to the combination of features necessary for carrying the invention into effect.

The sample tab of the invention may be used for the determination of a substance within a sample using spectroscopic or microscopic analysis. The sample tab comprising a base plate, a well disposed on the base plate and a cover plate. In a broad aspect, the present invention may be used with an apparatus for determining the concentration of a substance in a sample where the apparatus comprises a sample housing for receiving a sample tab; a radiation source; and radiation detector, operatively coupled with a system for providing a determination of the substance within the sample based on the determination of transmitted or reflected radiation.

According to one embodiment, the sample housing comprises a block with a slit for inserting the sample tab. The sample tab consists of a base plate with a well on the base plate for containing the sample and a cover plate which can be placed over the well prior to inserting the sample tab in the housing, preferably the cover plate closes automatically when inserted in the sample housing. The well may be of any desired shape and of any suitable volume.

The present invention may be used in a method of determining the concentration of a substance within a sample using a sample tab.

For example, which is not to be considered limiting in any manner, the sample tab as described herein may be used to determine the occurrence or concentration of any substance within a biological or non-biological sample. Preferably the sample is a fluid sample, for example but not limited to blood, or a semi-solid sample. A non-limiting example is provided herein where the sample tab of the present invention may be used, in combination with a spectrophotometer, to test a diabetic patient's compliance with their insulin dosing regime by quantifying The amount of HbA_{1c} and Hb contained in a blood specimen taken from the patient, without further treatment of the specimen, and comparing the concentration of HbA_{1c} and Hb within the sample. In this non-limiting example, an elevated ratio of HbA_{1c} reflects a lack of patient compliance. However, it is to be understood that the sample tab of the present invention may be used to determine the concentration of any substance within a sample using spectroscopic, microscopic, or other analysis that requires that a sample be retained within a translucent or transparent tab. Furthermore, the sample tab as described herein may comprise at least one surface that reflects incident radiation. Examples of other biological samples that may be determined include, but are not limited to whole blood, plasma, serum, sinovial fluid, cerebral spinal fluid, urine, lymph, mucus, faeces, and semen. However, non-biological samples may also be readily tested as described herein. Examples of non-biological samples include, but are not limited to dairy products, for example, milk, cheese, cottage cheese, yoghurt, or ice cream, or beverages, or semi-solid foods. Non-limiting examples of substances that may detected in these samples include Hemoglobin, one or more proteins, albumin, globulin, fat, lactose etc. An example of a non-limiting measurement that can be made is hematocrit in blood.

The present invention may be used in a method of quantification of one or more substances within a sample comprises the steps of:
i) generating a calibration algorithm for each of the substances to be determined;
ii) obtaining a sample and placing the sample into a sample tab;
iii) measuring with a spectrophotometer, absorbance of radiation by each of the substances in the sample; and
iv) incorporating the absorbance measured in step (iii) in the algorithms generated in (i), and calculating the concentration of the substances in the sample.

For example which is not to be considered limiting, if the sample is blood, then the concentration of HbA_{1c}, and Hb may be determined, In this case the method of quantification of the one or more chemical compounds comprises the steps of:
i) generating a calibration algorithm for each of the HbA_{1c} and Hb;
ii) obtaining a blood sample and placing the blood sample into a sample tab,
iii) measuring with the spectrophotometer, absorbance of radiation by each of the HbA_{1c}, and Hb in the blood sample: and
iv) incorporating the absorbance measured in step (iii) in the algorithms generated in (i), and calculating the concentration of the HbA_{1c} and Hb in the sample. Alternatively, one algorithm can be developed for the ratio of HbA_{1c}, to Hb expressed as % HbA_{1c}.

According to the above method quantification includes calculation of the first derivatives of at least two portions of a spectrum generated from a scan for each of the chemical compounds being determined, for example but not limited to, HbA_{1c}, and Hb which may then be used to calculate each of the HbA_{1c} Hb concentrations in the sample. Similarly, PLS (Partial Least Squares) or PCA (principal Components Analysis) may be used depending on the analyte being analysed.

The method as described herein can be used with reflectance instead of absorbance. In the case of reflectance, either the base plate or the cover plate may have a reflective surface or may be made of reflective material. Such a reflective surface or material could include any suitable reflective coating, for example, but not limited to, a ceramic coating, barium sulfate, Spectralon^{™} Spectraflect^{™}, or Duraflect^{™}.

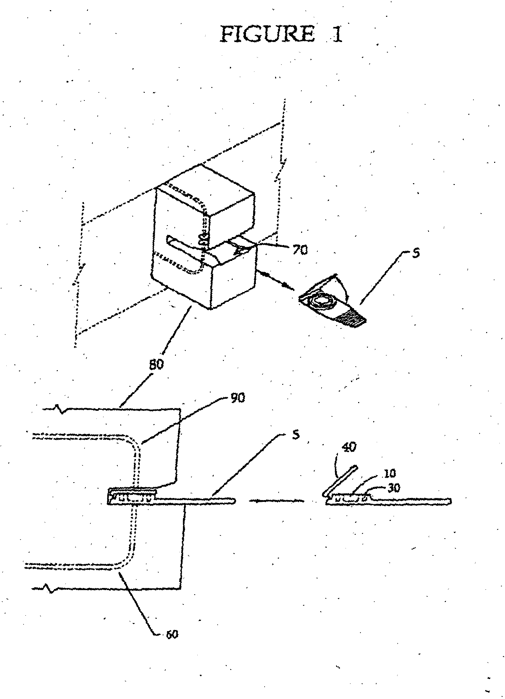

Turning now to the sample housing within a spectrophotometer and sample tab, as may be seen in FIG. 1, electromagnetic radiation from the spectrophotometer is delivered to the sample in the sample tab (5) through a source or incident optical fibre (60) while the sample rests in a sample tab holder (70) within a sample housing (80). The electromagnetic radiation passing through the sample tab and specimen is received by a receiving optical fiber (90), and processed further to determine concentrations of one or more substances within the sample.

The instrument shown in Figure 1 is configured for the use of a horizontal sample tab, however the sample tab may also be used in a vertical position within a spectrophotometer or other apparatus. For example, the sample tab may be inserted within a cuvette holder for use within standard spectrophotometers. In this application, the cuvette holder would be configured to hold the sample tab within the path of the radiation beam, as would be the case with a standard cuvette. The cuvette holder can be configured for horizontal or vertical use. However, there are several advantages that may be associated with horizontal use. For example, in sample comprising particulate matter, by maintaining the sample tab horizontally there is a uniform settling of components within the sample, in the direction of the incident radiation beam, such that the particulate matter remains in the light path even after it has travelled. An example of particulate matter is red blood cells in a blood sample.

### Sample Tab

The sample tab of the invention may be used for retaining a sample for further analysis, for example, but not limited to using a spectrophotometer or a microscope. A non-limiting example for the use of the sample tab of the present invention is to monitor a diabetic patient's compliance with their insulin dosing regime by spectrophotometry.

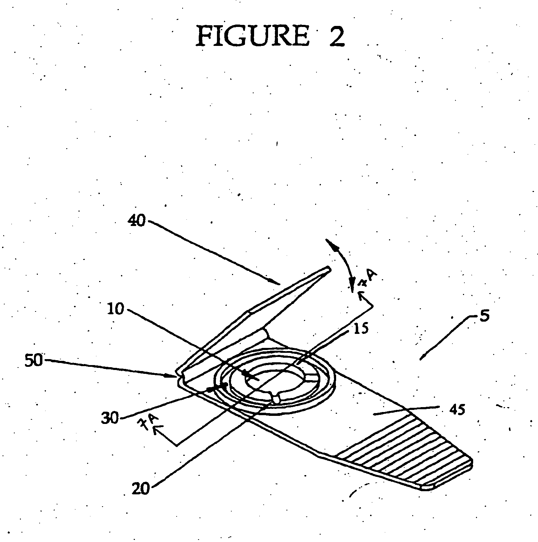

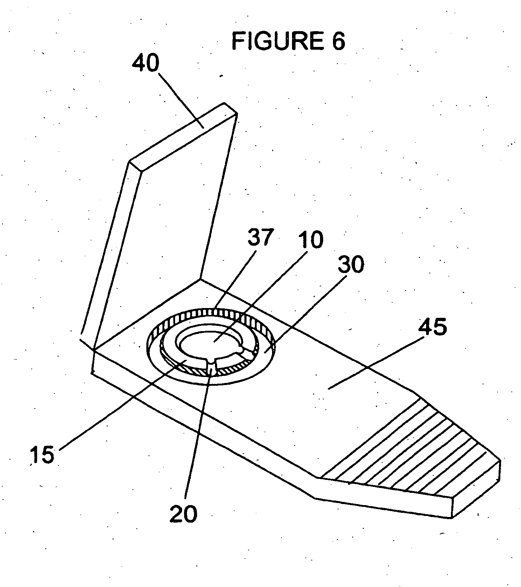

The sample tabs of the present invention comprise one, or more than one overflow groove or opening (20) in the side wall (15) of the well (10) permitting drainage of excess sample from within the well. Examples of such sample tabs are shown in Figures 2-6, 7A, 8B, 8D, 9B, 9D, 10B and 10D.

In use, a sample is retained in the well between the base plate and the cover plate so that electromagnetic radiation may pass through the base plate, through a sample in the well, and the cover plate. However, it is within the scope of the present invention that the radiation beam may travel through the sample, and be reflected off either the base plate or cover plate thereby doubling the path length of the radiation beam. By doubling the path length, a reduced volume of sample may be used during analysis. Either the base plate or the cover plate may have a reflective surface, or may be made of, reflective material.

The sample well defined by a side wall and a bottom wall contains one, or more than one opening or groove within the side wall, and an overflow channel for collecting excess sample as it is squeezed out by the closing cover plate. Preferably, the side wall contains one, or more than one opening, and an overflow channel, and the cover plate is connected to the base plate by, for example, a hinge or a tether, so that the sample proximate the edge of the cover plate connected to the base plate, makes contact with the cover plate first and as the cover plate closes, excess sample is squeezed out through the one, or more than one opening, which are preferably situated at the side where the cover plate makes final contact with the rest of the tab, and into the overflow channel. If the cover plate is connected to the base plate by way of a hinge, this design can help the sample tab slide into the receptor of an instrument, such as a spectrophotometer.

Referring now to Figure 2, there is shown an aspect of an embodiment of the sample tab of the present invention. Shown in Figure 2, is sample tab (5) comprising base plate (45), cover plate (40) and sample well (10) defined by wall (15). Sample well (10) may be of any volume required, for example, but not limited to, a size sufficient to allow a drop of blood to fill the well, preferably with some excess. For example, the volume of the sample well may be from about 10 µL to about 10 mL, or an amount or subrange therebetween, from about 50 µL to about 5 mL, or an amount or subrange therebetween, from about 100 µL to about 2.5 mL, or an amount or subrange therebetween, from about 250 µL to about 1 mL, or an amount or subrange therebetween, or from about 500 µL to about 1 mL, or an amount or subrange therebetween.

The sample well may also be large enough to accommodate about 10 mL of a sample, for example urine or a beverage. It must be understood that these are just non-limiting examples of sample sizes. In an embodiment which is not meant to be considered limiting in any manner, the well is circular and comprises dimensions of about 4 mm in diameter and about 2 mm in depth. Overflow openings or grooves (20) in wall (15) allow excess sample to flow out of sample well (10) when cover plate (40) is closed over sample well (10) and base plate (45). The height of the side wall (15) of the well may vary depending on the sample volume desired, but, generally does not exceed the height of the containment wall (37).

A second wall, such as, but not limited to, a containment wall (37) may be employed to retain the sample that overflows sample well (10), into an overflow channel (30) to prevent leakage of fluid from the sample tab, while permitting a sample of sufficient volume to fill the well. In this regard, the vertical height of containment wall (37) is less than or equal to the height of closed wall (15) defining sample well (10), more preferably it is equal to the height of closed wall (15) defining sample well (10). Cover plate (40) is preferably attached to base plate (45) by hinge (50) or other suitable attachment means known in the art. However, a non-hinged cover plate may also be used. The cover plate may be snapped on to the base plate as described below.

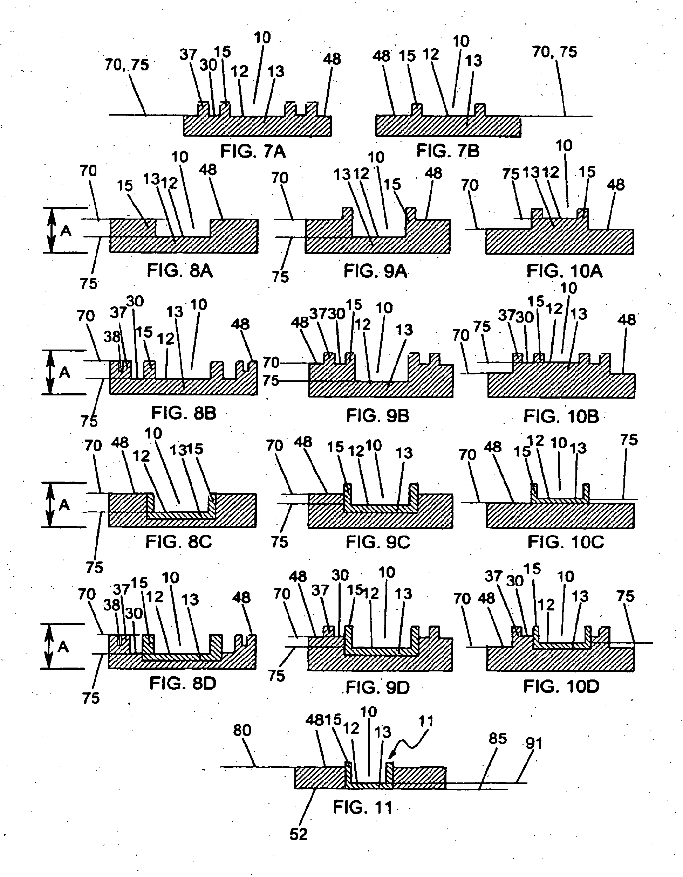

The cover plate, the base plate, or the entire sample tab may be manufactured from any suitable material known in the art for example, but not limited to, a transparent, translucent material, such as glass, plastic or a combination thereof, or a reflective material. If the base plate and cover plate are transparent or translucent, then it is preferred that the base plate, and cover plate comprise a transparent or translucent plastic, such as but not limited to polypropylene, polycarbonate, polyethylene, or polystyrene, however, a glass plate may also be used. If either of the base plate or cover plate is reflective, then a reflective material, for example but not limited to a ceramic coating, barium sulfate, Spectralon^{™}, Spectraflect^{™} or Duraflect^{™} may be used for one of the base or cover plates. As described in more detail below, the sample tab may be fitted with an insert (e.g. see 11; Figures 11, 15-19 and 20) that comprise the sample well. In this case, the sample tab may be opaque and of a different material that used for the insert, for example but not limited to a plastic, pliable polymer, nylon or similar material.

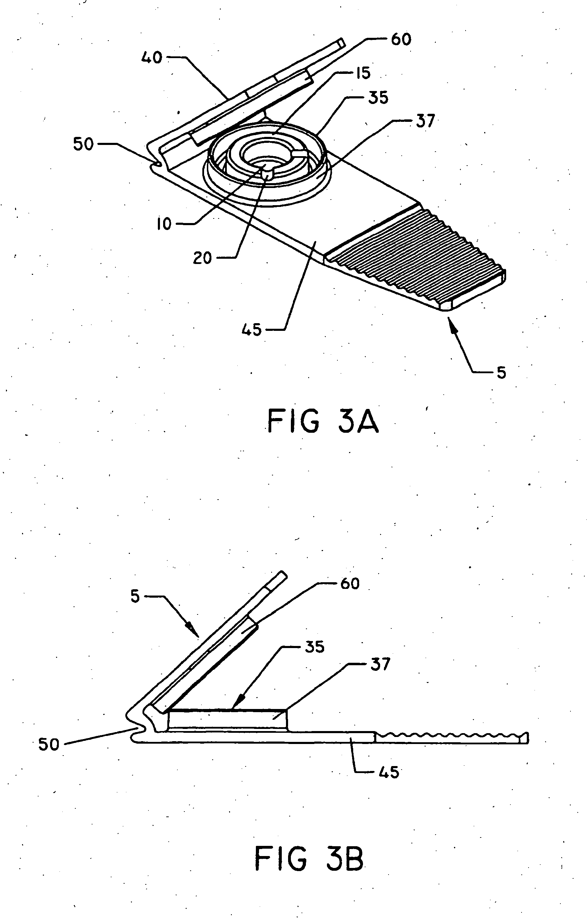

Optionally, the sample tab of the present invention may comprise a locking member to lock cover plate (40) to the base plate (45). The locking member may comprise a portion of the cover plate, base plate or both. Further, the locking member may reversibly or irreversibly lock the cover to the base plate. Any locking member known in the art may be employed with the sample tab of the present invention, for example, but not limited to those as shown in Figure 3-5. The use of a containment wall ensures that the sample is retained within the sample tab and reduces contamination between samples. Furthermore, by locking the cover plate of the sample tab in a closed position, the sample tab may be readily disposed of after use without sample leakage, or the sample tab may be used in a vertical position, for example within a cuvette holder adapted for use within spectrophotometers.

Referring now to Figure 3, there is shown an alternate aspect of an embodiment of the present invention. In Figure 3A, there is shown a perspective view of a sample tab (5) with cover plate (40) positioned over base plate (45) and revealing a well (10) defined by wall (15), overflow grooves (20), overflow-channel (30; Figures 1 and 2), and hinge (50). Figure 3B shows a side view of a sample tab (5) wherein cover plate (40) is open. Also shown in Figure 3B is a locking member (60) which permits cover plate (40) to be fastened to base plate (45). In the aspect of the embodiment shown in Figure 3B, the locking member (60) comprises a circular ring, capable of frictionally engaging containment wall (37), thereby reversibly attaching cover plate (40) to base plate (45), preventing the escape of a sample from the sample tab. However, as would be evident to someone of skill in the art, the locking member (60) comprising a circular ring may be attached to the base plate (45) in a variety of ways, for example, but not limited to, frictionally engaging a protrusion located on the outside of containment wall (37), or frictionally engaging a recessed groove in the base plate (38; Figure 8B, 8D), adjacent to and below containment wall (37).

When the cover plate is closed over the well, and attached to the base plate, it is preferred that the top surface (35) of the containment wall (37) seals against the lower surface of the cover slip. However, the locking member (60) may also be used to help seal the sample within the sample tab should any leakage occur past the containment wall (37). The embodiment shown in Figure 3 shows a hinged cover plate, however, it is to be understood that cover plate (40) comprising locking member (60) may be separate from base plate (45), and the cover plate may be attached to the base plate after a sample is introduced into well (10). Since the cover plate is attached to the base plate, the final sample tab assembly serves as one unit.

If it is required that the sample be effectively sealed within well (10), then the upper surface of containment wall (37) may be modified to comprise a sealing member (35), for example an "O ring" that fits within a grooved upper surface of the containment wall, the top surface of the containment wall (37) may be made of a softer pliable material, for example silicon, yet integral with the base plate. Alternatively, the top surface (35) of the containment wall (37) may be lubricated so that when cover slip (40) is attached to base plate (45) a seal is formed between base plate (45) and cover slip (40). The use of a containment wall ensures that the sample is retained within the sample tab and reduces contamination between samples. Furthermore, by locking the cover plate of the sample tab in a closed position, the sample tab may be readily disposed of after use without sample leakage.

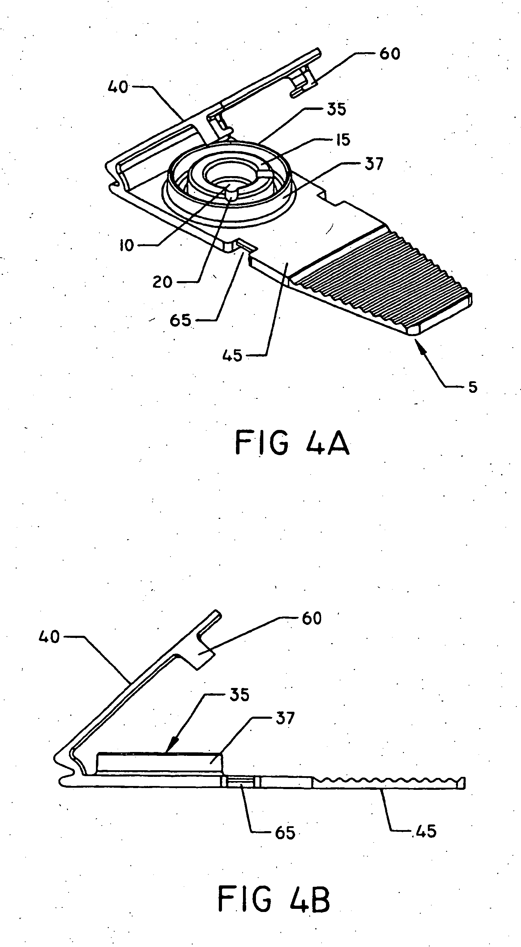

Referring now to Figure 4, there is shown an alternate aspect of an embodiment of the present invention. Figure 4A shows a perspective view, and in Figure 4B, a side view, of a sample tab (5) with cover plate (40) and base plate (45). In these figures, cover plate (40) is open revealing well (10) defined by wall (15), overflow grooves (20), and containment wall (37). Also shown in Figure 4B are locking members (60) which permit cover plate (40) to be attached to base plate (45). In the aspect of the embodiment shown in Figure 4A and 4B, locking members (60) comprise one or more clips capable of frictionally engaging base plate (45), at a corresponding recess (65) within the base plate, thereby locking cover plate (40) to base plate (45) and preventing the escape of a sample from well (10). Locking members (60) may be positioned so that when engaged with the base plate at the corresponding recess (65), they do not extend below the lower surface of the base plate, so that a smooth bottom surface is obtained. Such a smooth surface may be required for sliding the sample tab into a receptor of an apparatus, or for microscopic viewing.

If it is required that the sample be effectively sealed within well (10), then the upper surface of containment wall (37) may be modified to comprise a sealing member (35), for example an "O ring" that fits within a grooved upper surface of the containment wall, the top surface of the containment wall (37) may be made of a softer pliable material, for example silicon, yet integral with the base plate. Alternatively, the top surface (35) of the containment wall (37) may be lubricated so that when cover slip (40) is attached to base plate (45) a seal is formed between base plate (45) and cover slip (40). As described above, the use of a containment wall and optionally a locking cover plate ensures that sample leakage is kept to a minimum.

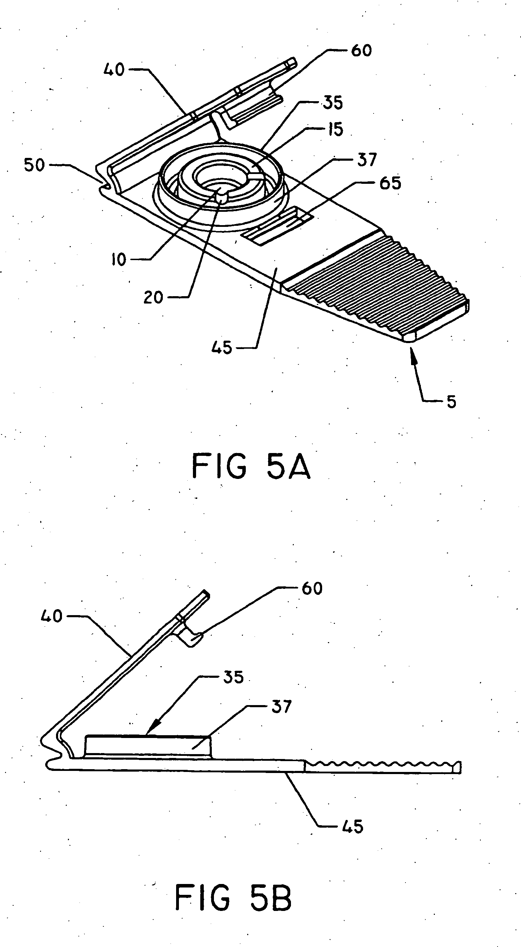

Referring now to Figure 5, there is shown another aspect of embodiment of the present invention. In Figure 5A, there is shown a perspective view, and in Figure 5B a side view, of sample tab (5) with cover plate (40) positioned over base plate (45). In Figure 5A, cover plate (40) is open revealing well (10) defined by wall (15), overflow grooves (20), containment wall (37) and hinge (50). Also shown in Figure 5B is locking member (60) which permits cover plate (40) to be attached to base plate (45) by association with a corresponding mating recess (65) positioned on the base plate. In the aspect of the embodiment shown in Figure 5A and 5B, locking member (60) comprises a clip capable of frictionally engaging mating recess (65) and locking cover plate (40) to base plate (45), preventing the escape of the sample. The mating recess may extend through the base plate (45), and engage the bottom surface of the base plate, or the locking member may engage a snap portion within recess (65) and not extend thorough the base plate. A smooth bottom surface may be required for sliding the sample tab into a receptor of an apparatus, or for microscopic viewing. It is to be understood that the locking member (60) may be positioned in the base plate, and recess (65) positioned on the cover slip if desired.

If it is required that the sample be effectively sealed within well (10), then the upper surface of containment wall (37) may be modified to comprise a sealing member (35) so that when cover slip (40) is attached to base plate (45) a seal is formed between base plate (45) and cover slip (40). In this embodiment, the use of a containment wall ensures that the sample is retained within the sample tab and reduces contamination between samples. Furthermore, by locking the cover plate of the sample tab in a closed position, the sample tab may be readily disposed of after use without sample leakage, or it may be used in a vertical position as required.

Figures 3-5 illustrate a locking member (60) on the cover plate (40) of the sample tab (5) of the present invention. However, it is also possible that locking member (60) may comprise a portion of base plate (45), and that the corresponding recess (65) be positioned on the cover plate (40).

In the examples of the sample tab shown in Figures 2-6 and 7A-B, a top surface (48) of the base plate (45) and a top surface (12) of the well (10) disposed on the base plate (45) define a first plane (70) and a second plane (75), respectively, which are coincident. In other examples, the top surface (48) of the base plate (45) and the top surface (12) of the bottom wall (13) of the well (10, 11) define a first plane (70) and a second plane (75), respectively, wherein the second plane is disposed below the first plane, as illustrated, for example, in Figures 8A-D and 9A-D, or the second plane is disposed above the first plane, as shown, for example, in Figures 10A-D.

The side and bottom walls of the well may be defined by the base plate, that is, the base plate and the well may be formed as a single structure, by, for example, injection molding (see 10 in Figure 7A-B, 8A-B, 9A-B and 10A-B). In other examples, the well is a separate structure, or insert, having side and bottom walls, which is fixedly or removably connected to a separately formed base plate, as illustrated by 11 in Figures 8C-D, 9C-D, 10C-D, and 11. For example the insert (11) may be press fit within an opening of appropriate size and shape that is defined by the base plate (45).

The top surface of the side wall of the well (10) disposed on the sample tab may be level with the top surface (48) of the base plate (45; see Figures 8A-D), or extend above the top surface (48) of the base plate (45; see Figure 7A-B, 9A-D and 10A-D). Similarly, the top surface of the containment wall (37), when present, may be level with the top surface (48) of the base plate (45; Figure 8B, 8D), or above the top surface (48) of the base plate (35; Figures 7A, 9B, 9D, 10B and 10D). If the plane defined by the top surface (12) of the bottom wall (13) of the well (10), 75, is lower than the plane defined by the top surface (48) of the base plate (45), the base plate may contain a groove (38) for frictionally engaging a locking member connected to the cover plate (see Figure 8B and 8D).

In another example, illustrated in Figure 11, the base plate (45) has a top surface (48), a bottom surface (52), and an opening extending from the top surface to the bottom surface, wherein the top surface of the base plate defines a first plane (80), and the bottom surface of the base plate defines a second plane (85). An insert (11) comprising a well (10) having a side wall (15) and a bottom wall (13) is disposed at least partly in the opening, wherein a top surface (12) of the bottom wall (13) defines a third plane (91), the third plane being above the first plane, coincident with the first plane, between the first and the second plane, coincident with the second plane, or below the second plane. In this example, the side wall of the well may be defined by the base plate, or the well may be fabricated as a separate structure. In the latter case, the well may be advantageously disposed of after use, and the base plate of the sample tab reused with a new well. Furthermore, a number of disposable sample wells of different volumes could be employed in this last example, permitting the analysis of a diverse array of samples of different volumes.

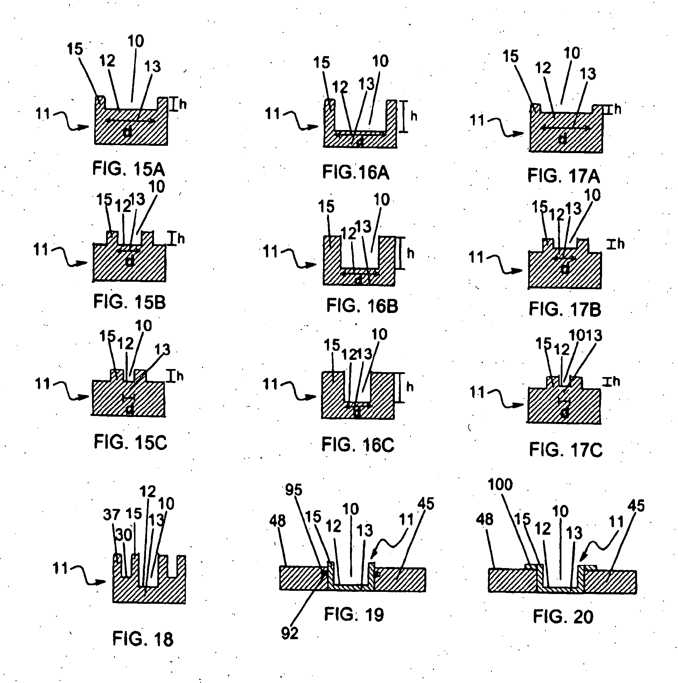

The insert (11) comprising well (10) also defines an overflow channel (30) between the side wall (15) and a containment wall (37), as illustrated in Figure 18, which are connected by one, or more than one overflow openings (not shown).

The insert (11) may be retained within the opening of the base plate (45) by frictional engaging the surface of the base plate defining the opening, as illustrated in Figure 11. Alternatively, the insert (11) may be retained within the opening of the base plate (45) by use of a snap-fitting. For example, the insert (11) may contain a pair of ridges (92), which matingly engage with a corresponding pair of recesses or grooves (95) within the opening, as illustrated in Figure 19, or alternatively, the opening may comprises a pair of ridges that matingly engage within a pair of recesses formed on the periphery of the well. In another example shown in Figure 20, the insert (11) may comprising a flange (100) at or adjacent to its top surface, which has an outside diameter larger than the diameter of the opening of the base plate (45), so that the upper part of the well may rest above the upper part of the opening of the sample tab.

The insert (11) may be manufactured from any suitable material known in the art for example, but not limited to, a transparent, translucent material, such as glass, plastic or a combination thereof, or a reflective material. Examples of a transparent or translucent material include a transparent or translucent plastic, such as, but not limited to polypropylene, polycarbonate, polyethylene, or polystyrene, however, a glass plate may also be used. Examples of reflective materials, include, for example, but are not limited to a ceramic coating, barium sulfate, Spectralon^{™}, Spectraflect^{™}, or Duraflect^{™}. As described above, a sample tab that is to be fitted with an insert (11) may be made from an opaque material that is the same or different from that used for the insert. For example which is not to be considered limiting in any manner, the sample tab may be made of a medium to soft plastic, pliable polymer, nylon or similar material. Such a material will permit the sample tab to remove and replace different inserts as required.

In addition, the section of the cover plate that contacts the top surface of the well when the cover plate is placed in the closed position, may be a separate component fabricated of a translucent, transparent or reflective material.

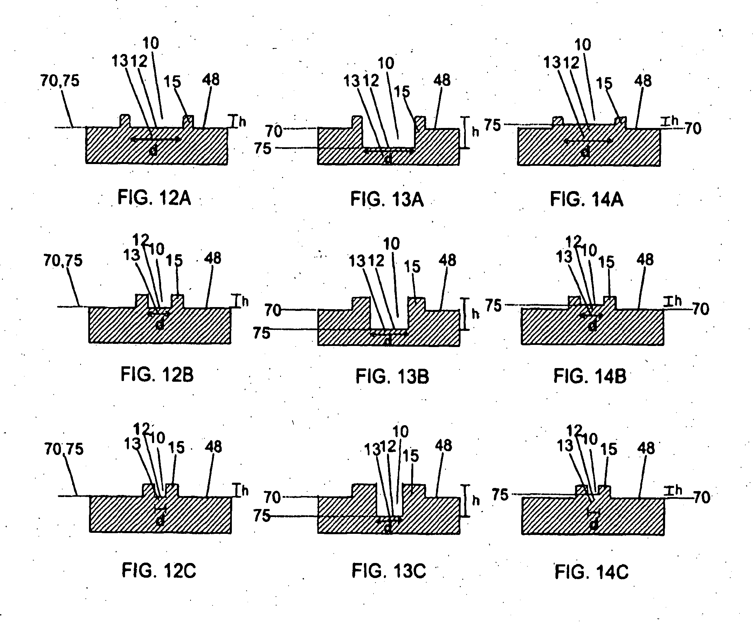

The depth or height of the inner surface of the side wall of the well (see "h"; Figures 12-17), and, therefore, the volume of the well (10) and the containment channel (30) may be varied according to the needs of the sample tab. For example, a shallow well and containment channel may be used when small samples are being tested using the sample tab. In addition, the combined height of the base plate, including the well, and any containment wall should not exceed a predetermined value A (e.g. see Figures 8A-D), so that when the cover plate is closed over the sample tab, the combined height of the closed cover plate and the base plate, will not exceed the height or clearance of a sample tab receptacle within a spectrometer that is used for measuring the values, for example, a concentration of an analyte within a sample placed within the well of the sample tab.

Figuresl2A-C show additional examples of sample tabs according to the present invention, in which the top surface of the base plate defines a first plane (70) and the top surface (12) of the bottom wall (13) of the well (10) defines a second plane, wherein the first and the second planes are coincident. The volume of the well may be adjusted by increasing, or, alternatively, by decreasing the diameter (d) of the well, as shown in Figures 12B and 12C.

In addition, the volume of the well may be decreased or increased by shortening or lengthening, respectively, the height of the inner surface of the side wall of the well ("h", see Figures 12-14). For accommodating samples of increasingly smaller volumes, for example, samples in the range of from about 5 µL to 100 µL, sample tabs according to the present invention, in which the second plane (75) is disposed above the first plane (70), as illustrated, for example, in Figure 14A, may be used. For samples of relatively larger volumes, for example, samples in the range of from about 500 µL to about 1 mL, sample tabs according to the present invention, in which the second plane (75) is disposed below the first plane (70), as illustrated, for example, in Figure 13A, may be used. The volume of the well of the sample tabs shown in Figures 13A and 14A may also be varied by increasing or decreasing the length of the top surface of the bottom wall (12), for example the diameter of a circular well ("d"; see Figures 12-14). For example, the volume of the sample tabs shown in Figure 13A and 14A may be reduced by decreasing the length of the top surface of the bottom wall (12) of the well, as illustrated in Figure 13B-C and 14B-C, respectively.

In order to maintain the same optical path for samples of differing volumes, it is preferred that sample tabs having wells of differing diameters but of the same height are used, such as the sample tabs illustrated in Figures 12A-C, 13A-C or 14A-C. The use of a series or a set of sample tabs having wells of the same height but of different diameters allows the same length of optical path to be maintained for samples of different volume, and minimizing the air space for the samples of relatively lower volume, which would be present if sample tabs of the same height and diameter would be used for all of the samples of different volumes. By reducing or removing the air space within the sample well, air-sensitive samples, for example blood, may be more accurately analyzed.

Figures 15A-C, 16A-C and 17A-C show examples of a removable insert (11) according to the present invention. The volume of the well (10) may be adjusted by increasing, or by decreasing the diameter (d) of the well, as shown in Figures 15A-C, 16A-C or 17A-C. In addition, the volume of the well (10) may be decreased or increased by shortening or lengthening, respectively, the height (H) of the well (10). For example, Figures 16A-C illustrate a set of wells having a relatively longer height (H), and, consequently, larger volumes than the corresponding wells shown in Figures 15A-C. Figures 17A-C show inserts (11) comprising wells (10) having a relatively shorter height, and, consequently, smaller volumes than the corresponding wells shown in Figures 15A-C. By using set of inserts, or sample tabs that are characterized in comprising wells with a similar height (H), or set of wells having a similar diameter (d), measurements may be obtained that have reduced variability arising from non-sample sources. For example, by maintaining the height of the well constant the length of the light path through the sample, and the sample tab, is the sample over a range of sample volumes.

In order to maintain the same optical path length for samples of differing volumes, replaceable inserts of differing diameters but of the same height should be used, such as the set of inserts illustrated in Figures 15A-C, the set of inserts shown in Fgures 16A-C, or the set of inserts shown in Figures 17A-C. It is to be understood that additional members of each of these sets may be include that have a different well volume, providing that the height (H) remains constant. The use of a series of sample tabs having wells of the same height but of different diameters allows the length of the optical path to be maintained for samples of different volume by minimizing air space for the samples of relatively lower volume, which would be present if sample tabs of the same height and diameter would be used for all of the samples of different volumes.

The sample tab of the present invention may retain any sample for analysis using any suitable instrument, for example, but not limited to spectroscopic or microscopic analysis. Preferably the sample tab retains a fluid or semi-solid sample, for example, but not limited to non-biological, or biological samples. Examples of non-biological samples include, but are not limited to dairy products, for example, milk, cheese, cottage cheese, yoghurt, or ice cream, or beverages, or semi-solid foods. Examples of biological fluids include, but are not limited to whole blood plasma, serum, sinovial fluid, cerebral spinal fluid, urine, lymph, mucus, faeces, and semen.

The embodiments shown in Figures 2-6, 7A-B, 8A-D, 9A-D, 10A-D, 11, 12A-C, 13A-C, 14A-C, 15A-C, 16A-C, 17A-C and 18-20 are meant to be exemplary rather than limiting in any manner. Those of skill in the art will understand that modifications of the sample tab, base plate, cover plate and locking member, or a combination thereof may be made and it is fully intended that such modifications are contemplated by the sample tab of the present invention.

The sample tab as described herein may be used within a spectrophotometer using standard methods as known in the art, for example as disclosed in U.S. Pat. Nos. 5,846,492, US 6,268,910, WO 98/39634. These references disclose the spectroscopic analysis of a biological fluid within a plastic or polyethylene container, for example blood bag tubing (U.S. Pat. Nos. 6,268,910), or a pipette tip (WO 98/39634; U.S. Pat. No. 5,846,492) However, it is to be understood that the sample tab as described herein may be readily adapted for other analytical uses including microscopic analysis.

The above description is not intended to limit the claimed invention in any manner. Furthermore, the discussed combination of features might not be absolutely necessary for the inventive solution.

The present invention has been described with regard to preferred embodiments. However, it will be obvious to persons skilled in the art that a number of variation and modifications can be made.

## Claims

1. A sample tab (5) comprising:
a base plate (45) having a top surface (48) and a bottom surface, the top surface (48) of the base plate (45) defining a first plane (70);
a well (10) disposed on a section of the base plate (45), the well (10) having a side wall (15) and a bottom wall (13), the side wall (15) comprising one, or more than one overflow opening (20) and being surrounded by a containment wall (37), wherein the containment wall (37) and the side wall (15) define an overflow channel (30) therebetween, and wherein a top surface (12) of the bottom wall (13) defines a second plane (75), the second plane (75) disposed above or below the first plane (70),; and
a cover plate (40) hingedly connected to the base plate (45), the cover plate (40) having an open position allowing a sample to be introduced into the well (10) and a closed position in which a bottom surface of a section of the cover plate (40) covers the well (10);
wherein
(a) at least a portion of the bottom wall (13) of the well (10) is transparent or translucent, and wherein at least a portion of one of (i) the section of the cover plate (40) and (ii) the section of the base plate (45) is transparent or translucent, and at least a portion of the other of (i) the section of the cover plate (40) and (ii) the section of the base plate (45) is transparent, translucent or reflective;
or
(b) the bottom wall (13) of the well (10) is formed by the section of the base plate, and wherein at least a portion of one of (i) the section of the cover plate (40) and (ii) the section of the base plate (45) is transparent or translucent, and at least a portion of the other of (i) the section of the cover plate (40) and (ii) the section of the base plate (45) is transparent, translucent, or reflective.

2. The sample tab of claim 1, wherein the containment wall (37) is circular.

3. The sample tab of claim 1 or 2, wherein the containment wall (37) comprises a sealing member (35) on its upper surface.

4. The sample tab of claim 3, wherein the sealing member (35) is an O ring.

5. The sample tab of claim 3, wherein the sealing member (35) is a pliable material integral with the containment wall.

6. The sample tab of any one of claims 1-5, further comprising a locking member (60) for locking the cover plate to the base plate when the cover plate is in the closed position.

7. The sample tab of claim 6, wherein the locking member (60) is an element for frictionally engaging an outer portion of the containment wall when the cover plate is in the closed position.

8. The sample tab of claim 7, wherein the containment wall (37) is circular, and the element is a circular ring.

9. The sample tab of claim 6, wherein the locking member (60) comprises one, or more than one clip for locking the cover plate to the base plate when the cover plate is in the closed position.

10. The sample tab of any one of claims 6 to 9, wherein the locking member (60) is on the cover plate (40), the base plate (45), or both the cover plate (40) and the base plate (45).

11. The sample tab of any one of claims 1-10, wherein the side wall (15) of the well (10) is circular.

12. The sample tab of any one of claims 1 to 11, wherein at least a portion of the bottom wall (13) of the well (10) is transparent or translucent, at least a portion of the section of the cover plate (40) is reflective, and at least a portion of the section of base plate (45) is transparent or translucent.

13. The sample tab of any one of claims 1 to 11, wherein at least a portion of the bottom wall (13) of the well (10) is transparent or translucent, at least a portion of the section of the cover plate (40) is transparente or translucent, and at least a portion of the section of the base plate (45) is transparent or translucent.

14. The sample tab of any one of claims 1 to 11, wherein at least a portion of the bottom wall (13) of the well (10) is transparent or translucent, at least a portion of the section of the cover plate (40) is transparent or translucent, and at least a portion of the section of the base plate (45) is reflective.

15. The sample tab of any one of claims 1 to 11, wherein the bottom wall (13) of the well (10) is transparent or translucent, the section of the cover plate (40) is reflective, and the section of the base plate (45) is transparent or translucent.

16. The sample tab of any one of claims 1 to 11, wherein the bottom wall (13) of the well (10) is transparent or translucent, the section of the cover plate (40) is transparent or translucent, and the section of the base plate (45) is transparent or translucent.

17. The sample tab of any one of claims 1 to 11, wherein the bottom wall (13) of the well (10) is transparent or translucent, the section of the cover plate (40) is transparent or translucent, and the section of the base plate (45) is reflective.

18. The sample tab of any one of claims 1 to 11, wherein the bottom wall (13) of the well is formed by the section of the base plate (45), at least a portion of the section of the cover plate (40) is reflective, and at least a portion of the section of the base plate (45) is transparent or translucent.

19. The sample tab of any one of claims 1 to 11, wherein the bottom wall (13) of the well (10) is formed by the section of the base plate (45), at least a portion of the section of the cover plate (40) is transparent or translucent, and at least a portion of the section of the base plate (45) is transparent or translucent.

20. The sample tab of any one of claims 1 to 11, wherein the bottom wall (13) of the well (10) is formed by the section of the base plate (45), at least a portion of the section of the cover plate (40) is transparent or translucent, and at least a portion of the section of the base plate (45) is reflective.

21. The sample tab of any one of claims 1 to 11, wherein the bottom wall (13) of the well (10) is formed by the section of the base plate (45), the section of the cover plate (40) is reflective, and the section of the base plate (45) is transparent or translucent.

22. The sample tab of any one of claims 1 to 11, wherein the bottom wall (13) of the well (10) is formed by the section of the base plate (45), the section of the cover plate (40) is transparent or translucent, and the section of the base plate (45) is transparent or translucent.

23. The sample tab of any one of claims 1 to 11, wherein the bottom wall (13) of the well (10) is formed by the section of the base plate (45), the section of the cover plate (40) is transparent or translucent, and the section of the base plate (45) is reflective.

24. The sample tab of any one of claims 1 to 23, wherein the second plane (75) is below the first plane (70).

25. The sample tab of any one of claims 1 to 23, wherein the second plane (75) is above the first plane (70).

26. The sample tab of any one of claims 1-25, wherein the side wall (15) and the bottom wall (13) of the well are formed by the base plate (45).

27. The sample tab of claim 26, wherein the side wall (15) of the well (10) extends above the top surface (48) of the base plate (45).

28. A method for analyzing a sample, comprising:
i) adding a sample into the well (10) of the sample tab (5) according to any one of claims 1-27,
ii) closing the cover plate (40) of the sample tab (5),
iii) inserting the sample tab (5) into an instrument for analyzing the sample, and
iv) analyzing the sample.

29. The method according to claim 28, wherein, in the step of inserting (step iii)), the sample tab (5) is placed in a horizontal position within a sample holder of the instrument, and wherein the sample is analyzed by projecting electromagnetic radiation through the well in a direction substantially perpendicular to the position of the sample tab.

30. A set of two, or more than two sample tabs, wherein each of the two, or more than two sample tabs is defined according to the sample tab of any one of claims 1-27, wherein:
a) the side wall (15) of the well (10) of one of the two, or more than two sample tabs has, on its inner surface, a height (h) of a first value, and the side wall (15) of the well (10) of each of the other one, or more than one of the two, or more than two sample tabs has, on its inner surface, a height (h) substantially equal to the first value, and
the bottom wall (13) of the well (10) of one of the two, or more than two sample tabs has, on its upper surface, a length of a second value, and the bottom wall (13) of the well (10) of each of the other one, or more than one of the two, or more than two sample tabs has, on its upper surface, a length less than or greater than the second value, or
b) the side wall (15) of the well (10) of one of the two, or more than two sample tabs has, on its inner surface, a height (h) of a first value, and the s ide wall (15) of the well (10) of each of the other one, or more than one of the two, or more than two sample tabs has, on its inner surface, a height (h) less than or greater than the first value, and
the bottom wall (13) of the well (10) of one of the two, or more than two sample tabs has, on its upper surface, a length of a second value, and the bottom wall (13) of the well (10) of each of the other one, or more than one of the two, or more than two sample tabs has, on its upper surface, a length substantially equal to the second value.

31. The method according to claim 28, wherein the method is for analyzing a set of two, or more than two samples, the method comprising:
i) adding one of the two, or more than two samples into the well of one of the two, or more than two sample tabs of the set according to claim 30
ii) closing the cover plate of the sample tab from step i);
iii) inserting the sample tab from step ii) into an instrument for analyzing the sample added in step i);
iv) analyzing the sample, and
v) repeating steps i)-iv) for each of the other one, or more than one sample tab of the two, or more than two sample tabs.

## Patentansprüche

1. Probenhalter (5) umfassend:
eine Basisplatte (45) mit einer oberen Oberfläche (48) und einer unteren Oberfläche, wobei die obere Oberfläche (48) der Basisplatte (45) eine erste Ebene (70) definiert;
eine Vertiefung (10), die auf einem Abschnitt der Basisplatte (45) angebracht ist, wobei die Vertiefung (10) eine Seitenwand (15) und eine Bodenwand (13) besitzt, wobei die Seitenwand (15) eine oder mehr als eine Überlauföffnung (20) umfasst, und von einer Stauwand (37) umgeben ist, wobei die Stauwand (37) und die Seitenwand (15) einen Überlaufkanal (30) dazwischen definieren, und wobei eine obere Oberfläche (12) der Bodenwand (13) eine zweite Ebene (75) definiert, wobei die zweite Ebene (75) über oder unter der ersten Ebene (70) angebracht ist; und
eine Abdeckplatte (40), die abschwenkbar mit der Basisplatte (45) verbunden ist, wobei die Abdeckplatte (40) eine geöffnete Stellung besitzt, die es ermöglicht eine Probe in die Vertiefung (10) einzuführen, und eine geschlossene Stellung besitzt, in der eine untere Oberfläche eines Abschnitts der Abdeckplatte (40) die Vertiefung (10) bedeckt;
wobei
(a) mindestens ein Teil der Bodenwand (13) der Vertiefung (10) durchsichtig oder lichtdurchlässig ist, und wobei mindestens ein Teil von einem von (i) dem Abschnitt der Abdeckplatte (40) und (ii) dem Abschnitt der Basisplatte (45) durchsichtig oder lichtdurchlässig ist, und mindestens ein Teil von dem anderem von (i) dem Abschnitt der Basisplatte und (ii) dem Abschnitt der Basisplatte (45) durchsichtig, lichtdurchlässig oder reflektierend ist;
(b) oder die Bodenwand (13) der Vertiefung (10) durch den Abschnitt der Basisplatte gebildet wird, wobei mindestens ein Teil von einem von (i) dem Abschnitt der Abdeckplatte (40) und (ii) dem Abschnitt der Basisplatte (45) durchsichtig oder lichtdurchlässig ist, und mindestens ein Teil von dem anderem von (i) dem Abschnitt der Basisplatte und (ii) dem Abschnitt der Basisplatte (45) durchsichtig, lichtdurchlässig oder reflektierend ist.

2. Probenhalter gemäß Anspruch 1, wobei die Stauwand (37) kreisförmig ist.

3. Probenhalter gemäß Anspruch 1 oder 2, wobei die Stauwand (37) ein Versiegelungselement (35) auf seiner oberen Oberfläche umfasst.

4. Probenhalter gemäß Anspruch 3, wobei das Versiegelungselement (35) ein O-Ring ist.

5. Probenhalter gemäß Anspruch 3, wobei das Versiegelungselement (35) ein formbares in die Stauwand integriertes Material ist.

6. Probenhalter gemäß einem jedem der Ansprüche 1-5, ferner ein Arretierungselement (60) zum Arretieren der Abdeckplatte in die Basisplatte umfassend, wenn die Abdeckplatte in der geschlossenen Stellung ist.

7. Probenhalter gemäß Anspruch 6, wobei das Arretierungselement (60) ein Element zum kraftschlüssigen Einrasten eines äußeren Abschnitts der Stauwand ist, wenn die Abdeckplatte in der geschlossenen Stellung ist.

8. Probenhalter gemäß Anspruch 7, wobei die Stauwand (37) kreisförmig ist, und das Element ein kreisförmiger Ring ist.

9. Probenhalter gemäß Anspruch 6, wobei das Arretierungselement (60) eine oder mehr als eine Klammer zum Arretieren der Abdeckplatte in die Basisplatte umfasst, wenn die Abdeckplatte in der geschlossenen Stellung ist.

10. Probenhalter gemäß einem jedem der Ansprüche 6 bis 9, wobei das Arretierungselement (60) auf der Abdeckplatte (40), der Basisplatte (45) oder sowohl auf der Abdeckplatte (40) als auch der Basisplatte (45) ist.

11. Probenhalter gemäß einem jedem der Ansprüche 1-10, wobei die Seitenwand (15) der Vertiefung (10) kreisförmig ist.

12. Probenhalter gemäß einem jedem der Ansprüche 1 bis 11, wobei mindestens ein Teil der Bodenplatte (13) der Vertiefung (10) durchsichtig oder lichtdurchlässig ist, mindestens ein Teil des Abschnitts der Abdeckplatte (40) reflektierend ist, und mindestens ein Teil des Abschnitts der Basisplatte (45) durchsichtig oder lichtdurchlässig ist.

13. Probenhalter gemäß einem jedem der Ansprüche 1 bis 11, wobei mindestens ein Teil der Bodenplatte (13) der Vertiefung (10) durchsichtig oder lichtdurchlässig ist, mindestens ein Teil des Abschnitts der Abdeckplatte (40) durchsichtig oder lichtdurchlässig ist, und mindestens ein Teil des Abschnitts der Basisplatte (45) durchsichtig oder lichtdurchlässig ist.

14. Probenhalter gemäß einem jedem der Ansprüche 1 bis 11, wobei mindestens ein Teil der Bodenplatte (13) der Vertiefung (10) durchsichtig oder lichtdurchlässig ist, mindestens ein Teil des Abschnitts der Abdeckplatte (40) durchsichtig oder lichtdurchlässig ist, und mindestens ein Teil des Abschnitts der Basisplatte (45) reflektierend ist.

15. Probenhalter gemäß einem jedem der Ansprüche 1 bis 11, wobei die Bodenplatte (13) der Vertiefung (10) durchsichtig oder lichtdurchlässig ist, der Abschnitt der Abdeckplatte (40) reflektierend ist, und der Abschnitt der Basisplatte (45) durchsichtig oder lichtdurchlässig ist.

16. Probenhalter gemäß einem jedem der Ansprüche 1 bis 11, wobei die Bodenplatte (13) der Vertiefung (10) durchsichtig oder lichtdurchlässig ist, der Abschnitt der Abdeckplatte (40) durchsichtig oder lichtdurchlässig ist, und der Abschnitt der Basisplatte (45) durchsichtig oder lichtdurchlässig ist.

17. Probenhalter gemäß einem jedem der Ansprüche 1 bis 11, wobei die Bodenplatte (13) der Vertiefung (10) durchsichtig oder lichtdurchlässig ist, der Abschnitt der Abdeckplatte (40) reflektierend ist, und der Abschnitt der Basisplatte (45) reflektierend ist.

18. Probenhalter gemäß einem jedem der Ansprüche 1 bis 11, wobei die Bodenplatte (13) der Vertiefung (10) durch den Abschnitt der Basisplatte (45) gebildet wird, mindestens ein Teil des Abschnitts der Abdeckplatte (40) reflektierend ist, und mindestens ein Teil des Abschnitts der Basisplatte (45) durchsichtig oder lichtdurchlässig ist.

19. Probenhalter gemäß einem jedem der Ansprüche 1 bis 11, wobei die Bodenplatte (13) der Vertiefung (10) durch den Abschnitt der Basisplatte (45) gebildet wird, mindestens ein Teil des Abschnitts der Abdeckplatte (40) durchsichtig oder lichtdurchlässig ist, und mindestens ein Teil des Abschnitts der Basisplatte (45) durchsichtig oder lichtdurchlässig ist.

20. Probenhalter gemäß einem jedem der Ansprüche 1 bis 11, wobei die Bodenplatte (13) der Vertiefung (10) durch den Abschnitt der Basisplatte (45) gebildet wird, mindestens ein Teil des Abschnitts der Abdeckplatte (40) durchsichtig oder lichtdurchlässig ist, und mindestens ein Teil des Abschnitts der Basisplatte (45) reflektierend ist.

21. Probenhalter gemäß einem jedem der Ansprüche 1 bis 11, wobei die Bodenplatte (13) der Vertiefung (10) durch den Abschnitt der Basisplatte (45) gebildet wird, der Abschnitt der Abdeckplatte (40) reflektierend ist, und der Abschnitt der Basisplatte (45) durchsichtig oder lichtdurchlässig ist.

22. Probenhalter gemäß einem jedem der Ansprüche 1 bis 11, wobei die Bodenplatte (13) der Vertiefung (10) durch den Abschnitt der Basisplatte (45) gebildet wird, der Abschnitt der Abdeckplatte (40) durchsichtig oder lichtdurchlässig ist, und der Abschnitt der Basisplatte (45) durchsichtig oder lichtdurchlässig ist.

23. Probenhalter gemäß einem jedem der Ansprüche 1 bis 11, wobei die Bodenplatte (13) der Vertiefung (10) durch den Abschnitt der Basisplatte (45) gebildet wird, der Abschnitt der Abdeckplatte (40) durchsichtig oder lichtdurchlässig ist, und der Abschnitt der Basisplatte (45) reflektierend ist.

24. Probenhalter gemäß einem jedem der Ansprüche 1 bis 23, wobei die zweite Ebene (75) unterhalb der ersten Ebene (70) ist.

25. Probenhalter gemäß einem jedem der Ansprüche 1 bis 23, wobei die zweite Ebene (75) oberhalb der ersten Ebene (70) ist.

26. Probenhalter gemäß einem jedem der Ansprüche 1-25, wobei die Seitenwand (15) und die Bodenwand (13) der Vertiefung durch die Basisplatte (45) gebildet wird.

27. Probenhalter gemäß Anspruch 26, wobei die Seitenwand (15) der Vertiefung (10) sich über die obere Oberfläche (48) der Basisplatte (45) erstreckt.

28. Verfahren zum Analysieren einer Probe umfassend:
i) Zugeben einer Probe in die Vertiefung (10) des Probenhalters (5) gemäß einem jedem der Ansprüche 1-27,
ii) Schließen der Abdeckplatte (40) des Probenhalters (5),
iii) Einführen des Probenhalters (5) in ein Gerät zum Analysieren der Probe, und
iv) Analysieren der Probe.

29. Verfahren gemäß Anspruch 28, wobei, während des Schrittes des Einführens des Probenhalters (Schritt iii)), der Probenhalter (5) in eine horizontale Stellung innerhalb eines Probenträgers des Gerätes gebracht wird, und wobei die Probe analysiert wird, indem elektromagnetische Strahlung durch die Vertiefung in eine Richtung projiziert wird, die im Wesentlichen im rechten Winkel zu der Stellung des Probenhalters ist.

30. Satz von zwei, oder mehr als zwei, Probenhaltern, wobei jeder der zwei, oder mehr als zwei, Probenhalter gemäß dem Probenhalter eines jedem der Ansprüche 1-27 definiert ist, wobei:
a) die Seitenwand (15) der Vertiefung (10) von einem der zwei, oder mehr als zwei, Probenhaltern auf seiner inneren Oberfläche eine Höhe (h) eines ersten Wertes besitzt, und die Seitenwand (15) der Vertiefung (10) von jedem des anderen einen, oder mehr als einen der zwei, oder mehr als zwei, Probenhalter auf seiner inneren Oberfläche eine Höhe (h) besitzt, die im Wesentlichen dem ersten Wert gleich ist, und
die Bodenwand (13) der Vertiefung (10) von einem der zwei, oder mehr als zwei Probenhaltern, auf seiner oberen Oberfläche eine Länge eines zweiten Wertes besitzt, und die Bodenwand (13) der Vertiefung (10) von jedem des anderen einen, oder mehr als einen der zwei, oder mehr als zwei, Probenhalter auf seiner oberen Oberfläche eine Länge besitzt, die geringer oder größer als der zweite Wert ist, oder
b) die Seitenwand (15) der Vertiefung (10) von einem der zwei, oder mehr als zwei Probenträger auf seiner inneren Oberfläche eine Höhe (h) eines ersten Wertes besitzt, und die Seitenwand (15) der Vertiefung (10) von jedem des anderen einen, oder mehr als einen der zwei, oder mehr als zwei, Probenhalter auf seiner inneren Oberfläche eine Höhe (h) besitzt, die geringer oder größer als der erste Wert ist, und
die Bodenwand (13) der Vertiefung (10) von einem der zwei, mehr als zwei Probenhaltern, auf seiner oberen Oberfläche eine Länge eines zweiten Wertes besitzt, und die Bodenwand (13) der Vertiefung (10) von jedem des anderen einen, oder mehr als einen der zwei, oder mehr als zwei, Probenhalter auf seiner oberen Oberfläche eine Länge besitzt, die im Wesentlichen dem zweiten Wert gleich ist.

31. Verfahren gemäß Anspruch 28, wobei das Verfahren zum Analysieren eines Satzes von zwei, oder mehr als zwei, Proben ist, wobei das Verfahren umfasst:
i) Zugeben von einem der zwei, oder mehr als zwei Proben in die Vertiefung von einem der zwei, oder mehr als zwei Probenhaltern des Satzes gemäß Anspruch 30
ü) Schließen der Abdeckplatte des Probenhalters aus Schritt i);
iii) Einführen des Probenhalters aus Schritt ii) in ein Gerät zum Analysieren der Probe, die in Schritt i) hinzugegeben wurde;
iv) Analysieren der Probe, und
v) Wiederholen der Schritte i)-iv) für jeden der anderen einen, oder mehr als einen Probenhalter der zwei, oder mehr als zwei Probenhaltern.

## Revendications

1. Plaquette d'échantillon (5) comprenant :
une plaque de base (45) ayant une surface supérieure (48) et une surface inférieure, la surface supérieure (48) de la plaque de base (45) définissant un premier plan (70) ;
une cavité (10) disposée sur une section de la plaque de base (45), la cavité (10) ayant une paroi latérale (15) et une paroi inférieure (13), la paroi latérale (15) comprenant une ou plus d'une ouverture de trop-plein (20) et étant entourée par une paroi de confinement (37), dans laquelle la paroi de confinement (37) et la paroi latérale (15) définissent un canal de trop-plein (30) entre elles, et dans laquelle une surface supérieure (12) de la paroi inférieure (13) définit un second plan (75), le second plan (75) étant disposé au-dessus ou au-dessous du premier plan (70) ; et
une plaque de couvercle (40) raccordée de manière articulée à la plaque de base (45), la plaque de couvercle (40) ayant une position ouverte permettant d'introduire un échantillon dans la cavité (10) et une position fermée dans laquelle une surface inférieure d'une section de la plaque de couvercle (40) recouvre la cavité (10) ;
dans laquelle :
(a) au moins une partie de la paroi inférieure (13) de la cavité (10) est transparente ou translucide, et dans laquelle au moins une partie de l'une parmi (i) la section de la plaque de couvercle (40) et (ii) la section de la plaque de base (45) est transparente ou translucide, et au moins une partie de l'autre parmi (i) la section de la plaque de couvercle (40) et (ii) la section de la plaque de base (45) est transparente, translucide ou réfléchissante ;
ou
(b) la paroi inférieure (13) de la cavité (10) est formée par la section de la plaque de base, et dans laquelle au moins une partie de l'une parmi (i) la section de la plaque de couvercle (40) et (ii) la section de la plaque de base (45) est transparente ou translucide, et au moins une partie de l'autre parmi (i) la section de la plaque de couvercle (40) et (ii) la section de la plaque de base (45) est transparente, translucide ou réfléchissante.

2. Plaquette d'échantillon selon la revendication 1, dans laquelle la paroi de confinement (37) est circulaire.

3. Plaquette d'échantillon selon la revendication 1 ou 2, dans laquelle la paroi de confinement (37) comprend un élément d'étanchéité (35) sur sa surface supérieure.

4. Plaquette d'échantillon selon la revendication 3, dans laquelle l'élément d'étanchéité (35) est un joint torique.

5. Plaquette d'échantillon selon la revendication 3, dans laquelle l'élément d'étanchéité (35) est un matériau pliable solidaire de la paroi de confinement.

6. Plaquette d'échantillon selon l'une quelconque des revendications 1 à 5, comprenant en outre un élément de blocage (60) pour bloquer la plaque de couvercle sur la plaque de base lorsque la plaque de couvercle est dans la position fermée.

7. Plaquette d'échantillon selon la revendication 6, dans laquelle l'élément de blocage (60) est un élément pour mettre en prise par frottement une partie externe de la paroi de confinement lorsque la plaque de couvercle est dans la position fermée.

8. Plaquette d'échantillon selon la revendication 7, dans laquelle la paroi de confinement (37) est circulaire et l'élément est une bague circulaire.

9. Plaquette d'échantillon selon la revendication 6, dans laquelle l'élément de blocage (60) comprend une ou plus d'une attache pour bloquer la plaque de couvercle sur la plaque de base lorsque la plaque de couvercle est dans la position fermée.

10. Plaquette d'échantillon selon l'une quelconque des revendications 6 à 9, dans laquelle l'élément de blocage (60) est sur la plaque de couvercle (40), la plaque de base (45) ou à la fois la plaque de couvercle (40) et la plaque de base (45).

11. Plaquette d'échantillon selon l'une quelconque des revendications 1 à 10, dans laquelle la paroi latérale (15) de la cavité (10) est circulaire.

12. Plaquette d'échantillon selon l'une quelconque des revendications 1 à 11, dans laquelle au moins une partie de la paroi inférieure (13) de la cavité (10) est transparente ou translucide, au moins une partie de la section de la plaque de couvercle (40) est réfléchissante, et au moins une partie de la section de la plaque de base (45) est transparente ou translucide.

13. Plaquette d'échantillon selon l'une quelconque des revendications 1 à 11, dans laquelle au moins une partie de la paroi inférieure (13) de la cavité (10) est transparente ou translucide, au moins une partie de la section de la plaque de couvercle (40) est transparente ou translucide, et au moins une partie de la section de la plaque de base (45) est transparente ou translucide.

14. Plaquette d'échantillon selon l'une quelconque des revendications 1 à 11, dans laquelle au moins une partie de la paroi inférieure (13) de la cavité (10) est transparente ou translucide, au moins une partie de la section de la plaque de couvercle (40) est transparente ou translucide, et au moins une partie de la section de la plaque de base (45) est réfléchissante.

15. Plaquette d'échantillon selon l'une quelconque des revendications 1 à 11, dans laquelle la paroi inférieure (13) de la cavité (10) est transparente ou translucide, la section de la plaque de couvercle (40) est réfléchissante, et la section de la plaque de base (45) est transparente ou translucide.

16. Plaquette d'échantillon selon l'une quelconque des revendications 1 à 11, dans laquelle la paroi inférieure (13) de la cavité (10) est transparente ou translucide, la section de la plaque de couvercle (40) est transparente ou translucide, et la section de la plaque de base (45) est transparente ou translucide.

17. Plaquette d'échantillon selon l'une quelconque des revendications 1 à 11, dans laquelle la paroi inférieure (13) de la cavité (10) est transparente ou translucide, la section de la plaque de couvercle (40) est transparente ou translucide, et la section de la plaque de base (45) est réfléchissante.

18. Plaquette d'échantillon selon l'une quelconque des revendications 1 à 11, dans laquelle la paroi inférieure (13) de la cavité est formée par la section de la plaque de base (45), au moins une partie de la section de la plaque de couvercle (40) est réfléchissante, et au moins une partie de la section de la plaque de base (45) est transparente ou translucide.

19. Plaquette d'échantillon selon l'une quelconque des revendications 1 à 11, dans laquelle la paroi inférieure (13) de la cavité (10) est formée par la section de la plaque de base (45), au moins une partie de la section de la plaque de couvercle (40) est transparente ou translucide, et au moins une partie de la section de la plaque de base (45) est transparente ou translucide.

20. Plaquette d'échantillon selon l'une quelconque des revendications 1 à 11, dans laquelle la paroi inférieure (13) de la cavité (10) est formée par la section de la plaque de base (45), au moins une partie de la section de la plaque de couvercle (40) est transparente ou translucide, et au moins une partie de la section de la plaque de base (45) est réfléchissante.

21. Plaquette d'échantillon selon l'une quelconque des revendications 1 à 11, dans laquelle la paroi inférieure (13) de la cavité (10) est formée par la section de la plaque de base (45), la section de la plaque de couvercle (40) est réfléchissante, et la section de la plaque de base (45) est transparente ou translucide.

22. Plaquette d'échantillon selon l'une quelconque des revendications 1 à 11, dans laquelle la paroi inférieure (13) de la cavité (10) est formée par la section de la plaque de base (45), la section de la plaque de couvercle (40) est transparente ou translucide, et la section de la plaque de base (45) est transparente ou translucide.

23. Plaquette d'échantillon selon l'une quelconque des revendications 1 à 11, dans laquelle la paroi inférieure (13) de la cavité (10) est formée par la section de la plaque de base (45), la section de la plaque de couvercle (40) est transparente ou translucide, et la section de la plaque de base (45) est réfléchissante.

24. Plaquette d'échantillon selon l'une quelconque des revendications 1 à 23, dans laquelle le second plan (75) est au-dessous du premier plan (70).

25. Plaquette d'échantillon selon l'une quelconque des revendications 1 à 23, dans laquelle le second plan (75) est au-dessus du premier plan (70).

26. Plaquette d'échantillon selon l'une quelconque des revendications 1 à 25, dans laquelle la paroi latérale (15) et la paroi inférieure (13) de la cavité sont formées par la plaque de base (45).

27. Plaquette d'échantillon selon la revendication 26, dans laquelle la paroi latérale (15) de la cavité (10) s'étend au-dessus de la surface supérieure (48) de la plaque de base (45).

28. Procédé pour analyser un échantillon, comprenant les étapes consistant à :
i) ajouter un échantillon dans la cavité (10) de la plaquette d'échantillon (5) selon l'une quelconque des revendications 1 à 27,
ii) fermer la plaque de couvercle (40) de la plaquette d'échantillon (5),
iii) insérer la plaquette d'échantillon (5) dans un instrument pour analyser l'échantillon, et
iv) analyser l'échantillon.

29. Procédé selon la revendication 28, dans lequel, à l'étape d'insertion (étape iii)), la plaquette d'échantillon (5) est placée dans une position horizontale dans un support d'échantillon de l'instrument, et dans lequel l'échantillon est analysé en projetant un rayonnement électromagnétique à travers la cavité dans une direction sensiblement perpendiculaire à la position de la plaquette d'échantillon.

30. Ensemble de deux ou plus de deux plaquettes d'échantillon, dans lequel chacune parmi les deux ou plus de deux plaquettes d'échantillon est définie selon la plaquette d'échantillon selon l'une quelconque des revendications 1 à 27, dans lequel :
a) la paroi latérale (15) de la cavité (10) de l'une des deux ou de plus de deux plaquettes d'échantillon a, sur sa surface interne, une hauteur (h) d'une première valeur et la paroi latérale (15) de la cavité (10) de chacune parmi l'autre ou plus d'une des deux ou plus de deux plaquettes d'échantillon a, sur sa surface interne, une hauteur (h) sensiblement égale à la première valeur, et
une paroi inférieure (13) de la cavité (10) de l'une parmi les deux ou plus de deux plaquettes d'échantillon a, sur sa surface supérieure, une longueur d'une seconde valeur, et la paroi inférieure (13) de la cavité (10) de chacune de l'autre parmi une, ou plus d'une des deux ou plus de deux plaquettes d'échantillon a, sur sa surface supérieure, une longueur inférieure ou supérieure à la seconde valeur, ou
b) la paroi latérale (15) de la cavité (10) de l'une parmi les deux ou plus de deux plaquettes a, sur sa surface interne, une hauteur (h) d'une première valeur, et la paroi latérale (15) de la cavité (10) de chacune de l'autre ou de plus d'une des deux ou de plus de deux plaquettes d'échantillon a, sur sa surface interne, une hauteur (h) inférieure ou supérieure à la première valeur,
et la paroi inférieure (13) de la cavité (10) de l'une parmi les deux ou plus de deux plaquettes d'échantillon a, sur sa surface supérieure, une longueur d'une seconde valeur, et la paroi inférieure (13) de la cavité (10) de chacune parmi l'autre ou de plus d'une des deux ou plus de deux plaquettes d'échantillon a, sur sa surface supérieure, une longueur sensiblement égale à la seconde valeur.

31. Procédé selon la revendication 28, dans lequel le procédé est prévu pour analyser un ensemble de deux ou plus de deux échantillons, le procédé comprenant les étapes consistant à :
i) ajouter l'un des deux ou plus de deux échantillons dans la cavité de l'une des deux ou plus de deux plaquettes d'échantillon de l'ensemble selon la revendication 30,
ii) fermer la plaque de couvercle de la plaquette d'échantillon à partir de l'étape i) ;
iii) insérer la plaquette d'échantillon à partir de l'étape ii) dans un instrument pour analyser l'échantillon ajouté à l'étape i) ;
iv) analyser l'échantillon, et
v) répéter les étapes i) - iv) pour chacune parmi l'autre, ou plus d'une plaquette d'échantillon des deux ou plus de deux plaquettes d'échantillon.
